Europäisches Patentamt

European Patent Office

Office européen des brevets

(19)

(11) Publication number: **0 303 477**
A2

## (12) EUROPEAN PATENT APPLICATION

(21) Application number: 88307424.7

(22) Date of filing: 11.08.88

(51) Int. Cl.⁴: **A 23 K 1/06**
A 23 K 1/175, A 23 K 1/18,
A 23 K 1/00, A 23 L 1/304,
A 23 C 9/13

(30) Priority: 11.08.87 GB 8718969

(43) Date of publication of application:
15.02.89 Bulletin 89/07

(84) Designated Contracting States: DE ES FR IT NL

(71) Applicant: PENTLANDS SCOTCH WHISKY RESEARCH
LIMITED
84 Slateford Road
Edinburgh EH11 1QU Scotland (GB)

(72) Inventor: Pass, Robert Thomas
84 Slateford Road
Edinburgh, EH11 1QU (GB)

(74) Representative: King, James Bertram
Herbert J.W. Wildbore 73 Farringdon Road
London EC1M 3JB (GB)

(54) Foodstuffs compositions.

(57) A set or settable foodstuff composition which comprises organic-acid containing fermented material and active magnesium oxide in an amount of at least 3% by weight, based on the total weight of the composition.

The fermented material may be distillery by-products, brewers grains, silage, yoghurt, whey or cheese. Optional ingredients such as energy providing material, proteinaceous material, urea, fillers and plant or dietary fibre may be included. The compositions can form animal feed blocks, pet treats and human food snacks without substantial water removal and by forming moulded compositions at or below 60°C.

EP 0 303 477 A2

**Description**

**Foodstuffs Compositions**

This invention is concerned with foodstuff compositions, suitable for consumption by humans or animals. It is more particularly concerned with such compositions which are settable in the sense of hardening by chemical reaction. The foodstuff compositions are preferably in solid form when hardened or set, for example in the form of lump, block, granule, tablet, pellet, chewable object or similar form.

There are already known various animal foodstuffs prepared in block form. Known methods of making them require high pressure and/or temperature to produce a solid, compacted block or a reaction mixture containing magnesium oxide with a setting agent based on calcium salts or oxides, such blocks generally using molasses as the base or bind material. A description of apparatus and methods for making poured or compacted feed blocks may be found in FEED MANUFACTURING TECHNOLOGY III published by the American Feed Industry Association Inc. in 1985. Reference is made in particular to Chapter 18 in Section IV thereof. A description of animal feed blocks based on molasses and urea may be found in WORLD ANIMAL REVIEW 57, January - March 1986, pages 40 - 48. Animal feed blocks based on molasses are also the subject of prior patents and in this regard we refer to the following United States Patents; 4005192, 4171385, 4234608, 3961081, 4431875 and 4027043.

Known pet treat or snack formulations, e.g. dog chews, require high proportions of collagen. To produce a sufficiently durable product high temperature drying of the formulation is also required.

It is also known to use wet by-products from a distillation process in the manufacture of animal foodstuffs. Such ingredients may be used as, or as components in, foodstuffs for animal consumption in solid form.

We have now discovered that foodstuffs in solid form suitable for both animal and human consumption, can be made from materials containing organic acid such as distillation by-products by the use of magnesium oxide and without using high pressures or temperatures.

According to this invention there is provided a set or settable foodstuff composition which comprises organic-acid containing fermented material and active magnesium oxide present in an amount of at least 3% by weight, preferably 3 - 10% and more preferably 3.5 - 7% by weight based on the total weight of the composition. The foodstuff composition may contain one or more other optional ingredients as described in more detail below The settable compositions may have a liquid pourable thick treacly, or paste-like consistency. Set foodstuff compositions based on this formulation are also included within the scope of the invention as are methods of making the foodstuff composition and formulations containing the set foodstuff composition. In a method of making a settable foodstuff composition the ingredients defined above are suitably mixed together, the mixture then being poured or compacted into a container of suitable shape and dimension depending upon the shape of foodstuff eventually required. Thus the settable composition may be poured into moulds if of a liquid pourable consistency, the shape and size of which can vary considerably according to the end use of the foodstuff composition, or otherwise transferred into moulds if of a paste-like consistency.

The present compositions and methods of making them permit preparation of animal, including pet, foodstuffs and foodstuffs suitable for human consumption by a chemical hardening reaction which occurs in the ingredients defined above which permits manufacture of, e.g. animal feed blocks, feed granules, pet chews or treats and human food snacks. The present invention permits use of high moisture containing ingredients as the organic acid containing fermented material such as distillery by-products or yoghurt which ordinarily would not be suitable for foodstuff preparation in view of microbiological instability. We have surprisingly found improved microbiological stability in these high-moisture containing mixtures. We have also established that the present compositions and methods of making them may not require elevated pressures or temperatures or addition of other inorganic salts or oxides. Processes for making the compositions and subsequent setting can be carried out at ambient temperatures and pressures. However, in certain embodiments, the addition of other compounds may have a beneficial effect. When wet distillery by-products are used in the preparation of known animal feed, extensive water removal is required to produce a stable product. Water removal is a costly process and high temperature drying can adversely affect the nutritional properties of the composition. By using the present composition and method a microbiologically stable product can be obtained which avoids the deleterious effects which result from high temperature drying.

For those embodiments of the invention which are based on pet treat formulations, e.g. collagen based dog chews, we have found that lower levels of collagen may be used, high drying temperatures are not required and factors such as chew hardness and durability can be readily controlled. Other forms of pet treat may be made from compositions according to the invention.

We have furthermore found that attractive low calorie, high fibre human foods, including snacks, can be made with compositions as defined above. For example, a human foodstuff based on bran and yoghurt may be made by the addition of sufficient magnesium oxide to cause the initial mixture to harden. In general it may be possible to produce foodstuff compositions which, in the set form, retain a high moisture content but are nevertheless stable.

The primary ingredient in compositions according to the invention is the organic-acid containing fermented material. This term is used in this specification to include wet or dry materials which have been naturally fermented by micro-organisms and which contain organic acid. Such fermented material may include a chemically reactive phosphorus component, which together with the organic acid component may contribute to the chemical setting of mixtures into generally solid form. There may be other components present which exert some influence on the setting reaction, within the fermented material, but the effect is nevertheless observed with fermented materials as defined herein. Thus there may be used, for example, distillery by-products, brewers' grains, silage or yoghurt. Further examples thereof are given as follows:

a) Distillery by products -
wet cereal and malt residues - draff and dreg,
dried cereal and malt residues - light grains, 'Vitaferm',
evaporated stillages - pot ale syrup, spent
and fermentation residues - wash syrup, condensed molasses solubles.
dried mixtures - grain distillers dark grains, maize
distillers dark grains, wheat
distillers dark grains, malt
distillers dark grains.

b) Brewery by-products -
wet cereal and malt residues - brewers spent grains,
wet hop and protein residues - spent hops, trub, brewers yeast.

c) Ensiled organic matter preserved by natural microbial activity or through the addition of organic acids -
forage silages - grass silage, legume silage, cereal silage.
other silages - ensiled sugarbeet pulp, fish silage, ensiled apple pomace, ensiled citrus pulp, ensiled poultry manure.

d) Dairy products -
cattle, sheep and goats milk yoghurts
acid aqueous whey
lactic cheeses.

e) Organic acids -
lactic acid and mixtures of lactic acid with other organic acids such as acetic, butyric, formic, propionic and succinic acids.

The above may be mixed, either alone or in combination, with active magnesium oxide to produce stable foodstuff compositions containing a comparatively high level of water. The presence of at least one organic acid in the primary ingredient, e.g. as produced by natural fermentation processes, or as an added component, appears to initiate the hardening or setting reaction. Phosphorus-containing and possibly other components present in the fermented material may contribute to the rate of setting reaction or the ultimate degree of hardening.

Foodstuff compositions prepared according to the invention may further contain one or more additional ingredients, additives, medicaments and the like. It is however preferred that the overall moisture content does not exceed 50% by weight, is preferably less than 40% and more preferably of the order 25-30% by weight, based on the total weight of the composition. The active magnesium oxide is preferably added at 3.5% or more by weight based on the total weight of the composition and the organic acid or acids are present in an amount of 1.5% or more, preferably 2% or more by weight, based on the total weight of the composition.

We have found that the hardness, mixing properties and other characteristics of the foodstuff compositions produced may be altered by varying the ingredients. By using higher quantities of active magnesium oxide, or alkaline metal oxides, or fat or limestone or total organic acid containing fermented materials, a comparatively harder set composition may be produced. Increasing the level of molasses, or urea, or salt will produce a comparatively softer set. If molasses level is increased to above 50% of the block then the block may fail to set or set only slowly. Increasing the ratio of organic acid containing ingredients to molasses will increase the hardness of set and may increase the rate of reaction. Varying this ratio may therefore be used to slow down the rate of reaction and when necessary produce a thinner more readily pourable mixture. The inclusion of materials which are fibrous, e.g. distillers draff or bran, reduces the density of the foodstuff compositions and also improves the binding capacity of the mixed composition.

Because the foodstuff compositions obtained have been found to be microbiologically more stable than would be predicted from their water content, the compositions and methods of making them may be used in many situations as an alternative to high temperature drying.

In order to make settable foodstuffs according to the invention, one or more of the organic acid-containing ingredients, e.g. as listed above, may be mixed with any optional ingredients or other additives required depending upon nutritional analysis required. The other ingredients here may include energy providing materials such as oil, fat, and/or carbohydrate, sugars, molasses, proteinaceous material such as animal or fish by-products, seed meals, urea or other nitrogen sources, minerals such as limestone, salt or trace elements, medicaments such as antibiotics, parasiticides, fungicides, insecticides, fillers such as limestone, clay, and/or plant fibre, sources of human dietary fibre such as wheat bran, and water.

The active magnesium oxide is added preferably as the first step in the mixing process to all other liquid ingredients and any fats or oils and in an amount of 3.5% or more preferably 4% by weight based on the weight of the total foodstuff composition ingredients. The liquids and magnesium oxide are thoroughly mixed in a high shear mixer. Other ingredients are then added and mixed.

If it is intended to make pourable block compositions the specific mixture required is transferred to a suitable mould, lightly compacted (if a damp meal has been prepared), and allowed to cure until the mixture has set rigid. The hardening time required depends upon the ingredients used, the mixture temperature, the volume of foodstuff and other ambient conditions. For example for mixtures based on 4% active magnesium oxide, setting times of 24 hours at 45°C are typical and a setting time of 6 hours at 60°C may be obtained.

If an animal foodstuff composition is required, in a form suitable for mixture with other feeds, or as an ingredient for subsequent use in the production of compound feeds, then the ingredients in the mixture can be allowed to form a damp meal which is then left to harden without compaction at 45°C to 60°C. If lumps or blocks are formed they may be broken down by suitable means into granules, pellets, tablets and the like.

Active magnesium oxide is also known as caustic magnesium oxide being magnesium oxide produced by low temperature calcination and which has a large surface area. Suitable grades are LYCAL 93/34 (Trademark), LYCAL 90/57S (Trademark), ANSCOR N (Trademark) and ANSCOR P (Trademark). Other grades of magnesium oxide having different reactivity may be suitable after appropriate adjustment to the percentage weight of each ingredient.

In order that the invention may be readily illustrated and carried into effect a range of formulations and specific examples will now be presented without limiting the scope of the invention thereto;

## Typical range of formulations

| Ingredients | % by weight | |
|---|---|---|
| Pot ale or spent wash syrups } | | { Organic acid |
| Dried dreg, draff, condensed } | 10 - 60 | { containing |
| molasses solubles } | | { ingredients |
| Phosphorus component (included in above) | 0.1 - 5 | (dry matter basis) |
| Active magnesium oxide | 3.5 - 7 | |
| Fat or oil | 0 - 25 | |
| Molasses | 0 - 45 | |
| Urea | 0 - 33 | |
| Salt | 0 - 33 | |
| Limestone | 0 - 15 | |

Other ingredients may also be added to provide nutrients and medicaments. The liquid organic-acid containing fermentation by-products, (pot ale syrups, spent wash syrups and condensed molasses solubles), form a major part of the formulation, in the range 10-87%, preferably between 20-50% and more preferably 25-35%. The viscosity of these liquids is variable and will depend on the exact process and plant used in their manufacture. Accordingly, it may be desirable to blend organic acid containing liquids to produce optimum mixing and pouring characteristics. Molasses may also be used to reduce thickness.

4

Examples 1 to 3 Animal Feed Blocks - General purpose

block for cattle

|  | % |  |
|---|---|---|
| Pot ale syrup or |  |  |
| Spent wash syrup | 30.0} | organic acid |
|  | } |  |
| Draff or brewers grains | 15.0} | containing |
|  | } |  |
| Dreg | 42.5} | ingredients |
| Urea | 0.2 |  |
| Vegetable oil or fat | 1.2 |  |
| Limestone | 6.1 |  |
| Active magnesium oxide | 5.0 |  |
|  | 100 |  |

Example 2

|  | % |  |
|---|---|---|
| Pot ale syrup or spent wash | 42.0 | } |
|  |  | } |
| Syrup |  | } Organic acid |
|  |  | } containing |
| Dried draff | 7.0 | } ingredients |
|  |  | } |
| Dried dreg | 3.0 | } |
| Molasses | 23.0 |  |
| Vegetable oil or fat | 5.0 |  |
| Urea | 5.0 |  |
| Salt | 3.0 |  |
| Limestone | 8.0 |  |
| Active magnesium oxide | 4.0 |  |
|  | 100.0 |  |

Example 3

|  | % |  |
|---|---|---|
| Pot ale syrup or spent wash syrup | 15.0 } |  |
| Condensed molasses solubles | 15.0 } Organic } acid |  |
| Dried draff | 7.0 } containing } ingredients |  |
| Dried dreg | 3.5 } |  |
| Molasses | 42.0 |  |
| Vegetable oil or fat | 2.0 |  |
| Urea | 2.5 |  |
| Salt | 3.0 |  |
| Limestone | 1.6 |  |
| Water | 4.4 |  |
| Active magnesium oxide | 4.0 |  |
|  | 100.0 |  |

Examples 4 and 5 Animal Feed Blocks - High magnesium blocks for cattle for the prevention of hypomagnesaemia

|  | % |  |
|---|---|---|
| Pot ale syrup or Spent wash syrup | 25.0} organic acid |  |
| Draff or brewers grains | 15.0} containing |  |
| Dreg | 43.3} ingredients |  |
| Dead burnt magnesium oxide | 7.1 |  |
| Limestone | 6.7 |  |
| Active magnesium oxide | 3.0 |  |
|  | 100 |  |

6

Example 5

|  | % |  |
|---|---|---|
| Pot ale or spent wash syrup | 28.0 } | organic acid |
|  | } | containing |
| Dried draff | 4.0 } | ingredients |
| Molasses | 39.0 |  |
| Vegetable oil or fat | 7.0 |  |
| Urea | 4.7 |  |
| Salt | 3.0 |  |
| Limestone | 4.0 |  |
| Dead Burnt magnesium oxide | 6.3 |  |
| Active magnesium oxide | 4.0 |  |
|  | 100.0 |  |

Examples 6 and 7 - Low copper sheep blocks

| Example 6 | % |  |
|---|---|---|
| Pot ale syrup or |  |  |
| spent wash syrup | 30.0} | organic acid |
| Draff or brewers grains | 15.0} | containing |
| Dreg | 27.8} | ingredients |
| Urea | 0.5 |  |
| Vegetable oil or fat | 1.2 |  |
| Limestone | 20.4 |  |
| Active magnesium oxide | 5.0 |  |
|  | 100 |  |

7

Example 7

|                        | %      |                                |
| ---------------------- | ------ | ------------------------------ |
| Spent wash syrup       | 40.0   | } *organic acid*               |
| Dried draff            | 6.0    | } *containing*                 |
| Dried dreg             | 3.0    | } *ingredients*                |
| Molasses               | 18.0   |                                |
| Vegetable oil or fat   | 8.2    |                                |
| Urea                   | 3.7    |                                |
| Salt                   | 3.1    |                                |
| Limestone              | 14.0   |                                |
| Active magnesium oxide | 4.0    |                                |
|                        | 100.0  |                                |

Examples 8 and 9 High energy cattle block

| Example 8              | %      |             |
| ---------------------- | ------ | ----------- |
| Pot ale syrup or       |        |             |
| spent wash syrup       | 30.0}  | organic acid |
| Draff or brewers grains | 15.0} | containing  |
| Dreg                   | 42.5}  | ingredients |
| Urea                   | 0.2    |             |
| Vegetable oil or fat   | 5.0    |             |
| Limestone              | 2.3    |             |
| Active magnesium oxide | 5.0    |             |
|                        | 100    |             |

8

Example 9                                    %

Pot ale or spent wash syrup    28.0 } organic acid
                                     }
Dried draff                     7.0 } containing
                                     }
Dried dreg                      3.5 } ingredients

Molasses                       26.1

Vegetable oil or fat           20.8

Urea                            4.1

Limestone                       1.4

Salt                            3.0

Active magnesium oxide          4.0

Water                          _2.1_

                              100.0


Examples 10 and 11   General purpose block with dried by-products

Example 10                    %

Distillers dark grains or           organic acid
                                    containing
Vitaferm                     36.5   ingredient

Urea                          0.2

Vegetable oil or fat          1.2

Limestone                     6.1

Water                        51.0

Active magnesium oxide       _5.0_

                             _100_

Example 11

%

| | | |
|---|---|---|
| Distillers dark grains or | | Organic acid |
| | | containing |
| Vitaferm | 30.6 | ingredient |
| Molasses | 23.6 | |
| Vegetable oil or fat | 5.0 | |
| Urea | 5.0 | |
| Salt | 3.0 | |
| Limestone | 8.6 | |
| Active magnesium oxide | 3.5 | |
| Water | 20.7 | |
| | 100.0 | |

Example 12 – Mineralised salt lick for cattle or sheep.

%

| | | |
|---|---|---|
| Pot ale or spent wash syrup | 30.0 | } Organic acid |
| Dried draff | 7.0 | } containing |
| Dried dreg | 3.5 | } ingredients |
| Urea | 5.0 | |
| Limestone, other minerals | | |
| and trace elements | 6.2 | |
| Salt | 32.8 | |
| Active magnesium oxide | 4.0 | |
| Water | 11.5 | |
| | 100.00 | |

Example 13 -  Mineralised high protein lick for cattle or
sheep.

|                                         | %    |              |
|-----------------------------------------|------|--------------|
| Pot ale or spent wash syrup             | 30.0 | } organic acid |
|                                         |      | } containing |
| Dried draff                             | 7.0  | } ingredients |
| Dried dreg                              | 3.5  |              |
| Urea                                    | 32.8 |              |
| Limestone, other minerals and trace elements | 6.2  |        |
| Salt                                    | 5.0  |              |
| Active magnesium oxide                  | 4.0  |              |
| Water                                   | 11.5 |              |
|                                         | 100.0 |             |

Example 14 - General purpose block with no urea
(i.e. only natural vegetable proteins.)

|                                      | %    |              |
|--------------------------------------|------|--------------|
| Pot ale or spent wash syrup          | 39.7 | } organic acid |
|                                      |      | } containing |
| Dried dreg                           | 20.0 | } ingredients |
| Molasses                             | 27.0 |              |
| Extracted rape seed meal             | 2.8  |              |
| Limestone and other minerals         | 6.5  |              |
| Active magnesium oxide               | 4.0  |              |
|                                      | 100.0 |             |

11

Example 3 Animal feed meal formulations

The formulations of Examples 1 to 14 above were prepared but allowed to harden without compaction, and where necessary broken down by suitable means.

Example 16 - Dog Treats - Low collagen, chocolate flavoured treat

|  | % | |
|---|---|---|
| Pot ale syrup or | | } |
| spent wash syrup | 24.0 | } organic acid<br>} containing<br>} ingredients |
| Draff or brewers grains | 11.0 | } |
| Sugar beet molasses | 25.0 | |
| Collagen | 15.0 | |
| Wheat flour | 12.0 | |
| Cocoa | 6.0 | |
| Active magnesium oxide | 7.0 | |
| | 100 | |

Example 17 - Dog Treats - Beef chew - high collagen recipe

|  | % | |
|---|---|---|
| Collagen | 42.5 | |
| Spent wash syrup | 25.0 | organic acid<br>containing<br>ingredient |
| Dicalcium phosphate | 10.0 | |
| Water | 16.7 | |
| Active magnesium oxide | 5.8 | |
| | 100 | |

## Example 18 Low calorie human food snack

|  | % |  |
|---|---|---|
| Yoghurt (natural or flavoured) | 64.2 | organic acid containing ingredient |
| Wheat bran | 28.8 | |
| Active magnesium oxide | 7.0 | |
|  | 100 | |

Snack provides approximately 93 kcal/100g and

13% dietary fibre.

In the above examples pot ale and spent wash syrups had varying consistencies and were between 30-45% dry matter, dreg was fine centrifuged and filtered yeast and cereal debris having a dry matter content of 30 - 40%, typically 35%, the draff was screened maize fragments before distillation, having a dry matter content of 25% to 35%. Dried dreg and dried draff had a dry matter content of 88 - 99%, typically 95%. Condensed molasses solubles was the evarporated residue from previously fermented molasses having a dry matter content of 50 - 60%, typically 56%. The foodstuff formulations were based on suitable nutritional formulations, meeting or exceeding minimum nutritional specifications.

**Claims**

1. A set or settable foodstuff composition characterised in that it comprises organic-acid containing fermented material and active magnesium oxide in an amount of at least 3% by weight, based on the total weight of the composition.

2. A composition as claimed in Claim 1 characterised in that the magnesium oxide is present in an amount of 3 to 10% by weight.

3. A composition as claimed in Claim 2 characterised in that the magnesium oxide is present in an amount of 3.5 to 7% by weight.

4. A composition as claimed in Claim 4 characterised in that the fermented material or a proportion thereof is in liquid form and constitutes 10 to 87% by weight, based on the total weight of the composition.

5. A composition as claimed in any preceding claim characterised in that the fermented material comprises one or more of the following: distillery by-products, fermentation by-products, brewers grains, silage, yoghurt, whey and cheese.

6. A composition as claimed in any preceding claim characterised in that it includes one or more added organic acid components.

7. A composition as claimed in any preceding claim characterised in that it comprises a chemically reactive phosphorus component.

8. A composition as claimed in any preceding claim further including one or more optional ingredients from the following: energy providing material, proteinaceous material, urea and/or other nitrogen source, alkali metal oxide, mineral, trace element, medicament, filler and source(s) of fibre.

9. A composition as claimed in any preceding claim characterised in that the amount of water present falls within one or more of the following: less than 50% by weight, less than 40% by weight and in the range 25 - 30% by weight, based on the weight of the total composition.

10. A composition as claimed in any preceding claim characterised in that it includes collagen in an amount of less than 50% by weight, based on the weight of the total composition.

11. A pet snack, treat or chew characterised in that it comprises a set composition as defined in Claim 10 wherein the amount of collagen is less than 20% by weight.

12. A human food snack characterised in that it comprises a set composition as claimed in Claim 5

13

wherein the fermented material comprises more than 50% by weight of yoghurt.

13. A set foodstuff composition as claimed in any one of claims 1 to 9 characterised in that it is in the form of lump, block, granules, tablet or pellet.

14. A method of making a settable foodstuff composition as defined in any one of Claims 1 to 10 characterised in that it comprises admixing the active magnesium oxide with all liquid components including any oil or fat present, then subsequently adding any other optional ingredients as defined herein, the process carried out without water removal.

15. A method of making a set foodstuff composition as defined in any one of Claims 11 to 13 which comprises preparing a settable foodstuff composition as defined in any one of Claims 1 to 9 and allowing it to set or harden in a suitable mould with or without compaction at a temperature from ambient temperature to 60°C, preferably from 45° to 60°C.